# EUROPÄISCHE PATENTSCHRIFT

(11) **EP 2 156 156 B1**
(45) Veröffentlichungstag und Bekanntmachung des Hinweises auf die Patenterteilung: **09.01.2013**
(21) Anmeldenummer: 08748790.6
(22) Anmeldetag: 08.05.2008
(51) Int. Cl.: G01L 3/10

(54) **ANTRIEBSEINRICHTUNG MIT EINER ANTRIEBSWELLE UND EINER EINRICHTUNG ZUR ERFASSUNG EINES DREHMOMENTS**
DRIVE DEVICE COMPRISING A DRIVE SHAFT AND A DEVICE FOR DETECTING TORQUE
DISPOSITIF D'ENTRAÎNEMENT COMPRENANT UN ARBRE D'ENTRAÎNEMENT ET UN DISPOSITIF POUR DÉTERMINER UN COUPLE

(30) Priorität: 16.05.2007 DE 102007023109; 28.09.2007 DE 102007046749
(43) Veröffentlichungstag der Anmeldung: 24.02.2010
(73) Patentinhaber: Schaeffler Technologies AG & Co. KG, 91074 Herzogenaurach (DE)
(72) Erfinder: GRAB, Harald, 30419 Hannover (DE); PAUSCH, Michael, 97464 Oberwerrn (DE)
(86) Internationale Anmeldenummer: PCT/DE2008/000803
(87) Internationale Veröffentlichungsnummer: WO 2008/138322

(56) Entgegenhaltungen:
- EP-A- 0 765 804
- EP-A- 1 046 893
- WO-A-00/63663
- JP-A- 2000 335 476
- US-A- 5 442 966
- US-A- 5 816 599
- US-A- 2005 193 834

## Beschreibung

### Gebiet der Erfindung

Die Erfindung liegt auf dem Gebiet des Maschinenbaus und der Messtechnik. Sie ist bei verschiedenartigen Antriebseinrichtungen verwendbar, wie beispielsweise bei Fahrrädern, Ergometern, Pedelecs oder sonstigen mittels Antriebskurbeln antreibbaren Einrichtungen. Die Erfindung betrifft sowohl eine Antriebseinrichtung als auch eine mit mindestens einer Antriebskurbel antreibbare Einrichtung, insbesondere ein Fahrrad, ein Ergometer oder ein Pedelec.

Bei derartigen Geräten kann es sinnvoll sein, verschiedene Größen zu erfassen, wie beispielsweise bei Fahrrädern die Geschwindigkeit und die zurückgelegte Fahrstrecke. Beispielsweise kann die augenblickliche Geschwindigkeit dem Fahrer einen Hinweis darauf geben, ob es sinnvoll ist, einen bestimmten Übersetzungsgang zu wählen oder nicht.

Bei einer derartigen Entscheidung ist es jedoch sinnvoll, nicht nur die Geschwindigkeit sondern auch das augenblicklich ausgeübte Drehmoment zu bestimmen, um die Kraftbelastung der Teile des Fahrrades und die vom Fahrer ausgeübte Kraft, die der Belastung seines Knochengerüstes, der Muskulatur und der Gelenke gleichzusetzen ist, zu bestimmen. Auch diese Größen können für die Wahl einer Übersetzung oder auch für die Entscheidung für das Zuschalten eines Hilfsantriebs ausschlaggebend sein.

Zudem kann aus der Drehzahl der Antriebswelle im Zusammenhang mit einem gemessenen Drehmoment direkt die Leistung bestimmt werden, die in die Antriebswelle eingebracht wird.

Aus dem Stand der Technik sind vielfältige Möglichkeiten zur Drehmomentbeziehungsweise Torsionserfassung bekannt, von denen einige auch speziell auf die Anwendung mit Antriebskurbeln, insbesondere Tretkurbeln bei Fahrrädern, spezialisiert sind.

Die DE 102005018286 A1 offenbart eine Vorrichtung zum Bestimmen eines auf eine Welle ausgeübten Drehmoments, wobei in einem ersten Wellenabschnitt der Welle ein Multipolmagnetring und in einem zweiten Wellenabschnitt ein Statorhalter mit Statorelementen und in axialer Richtung abragenden Fingern vorgesehen ist. Über einen Magnetflussring werden magnetische Flüsse je nach relativer Verdrehung der Wellenteile mehr oder weniger stark geschlossen, so dass der Verdrehwinkel, der ein Maß für die Torsionskräfte ist, gemessen wird.

Aus der DE 10225018293 A1 ist ein Drehmomentsensor bekannt, bei dem an zwei Abschnitten der Welle jeweils für sich ein Magnet und eine Sensoreinheit befestigt ist, wobei die Sensoreinheit als Näherungsschalter wirkt und eine Verdrehung der Welle als Positionsänderung des Magneten anzeigt.

Die DE 102005023182 A1 zeigt eine Drehmomenterfassungsvorrichtung mit einer Drehmomentübertragungsplatte zur Übertragung eines Drehmomentes zwischen einem Motorabtriebselement und einem Drehmomentwandlerantriebselement, wobei die Übertragungsplatte durch gezielte Schwächungen leicht elastisch in Folge eines Drehmoments verformbar ist und wobei an verformbaren Stegen der Übertragungsplatte Dehnungsmessstreifen zum Nachweis der elastischen Verformung vorgesehen sind. Über die Funktion der Dehnungsmessstreifen ist dort nichts weiter ausgeführt.

Die DE 102005041287 A1 zeigt einen Drehmomentsensor mit zwei Teilwellen, wobei jede der Teilwellen mit einem so genannten Erfassungsrohr verbunden ist und die Erfassungsrohre koaxial zueinander liegen. Sie sind mit voneinander beabstandeten Stellen an den Teilwellen fest verbunden und weisen stirnseitig umlaufend Zähne auf, so dass bei mehr oder weniger starker Verdrehung der Wellenteile der magnetische Widerstand zwischen den Erfassungsrohren je nach der Übereinstimmung der Zähne sich periodisch ändert. Hierdurch wird eine Verdrehung der Teilwellen gegeneinander nachweisbar. Diese ist ein Maß für die einwirkenden Torsionskräfte.

Aus der DE 10044701 C1 geht eine Übertragungseinrichtung an den Pedalen eines Fahrrades hervor, mittels deren die Pedalkraft auf die Tretkurbel übertragen wird. Ein elastisches Element in Form einer Feder wird durch die Kraftübertragung komprimiert und diese Kraftwirkung wird gemessen, um daraus das übertragene Drehmoment zu bestimmen.

Aus der DE 69900898 T2 ist einerseits die Anbindung von magnetostriktiven Elementen für die Torsionsmessung bekannt, wobei durch ein magnetisches Material die Torsion in eine elektrische Spannung umgesetzt werden soll.

Hauptgegenstand des Dokuments ist andererseits eine Messung eines Drehmoments mittels zweier gemeinsam gelagerter Scheiben, die über in Drehrichtung wirkende Federelemente gekoppelt sind. Durch den erzielten Winkelversatz lässt sich das übertragene Drehmoment zwischen beiden Scheiben bestimmen.

Aus der EP 1046893 B1 ist grundsätzlich die Verwendung des magnetostriktiven Effekts für die Drehmomentmessung und die Befestigung eines magnetostriktiven Ringelements auf einer Welle zur Übertragung des Drehmoments und zur Ausnutzung des Effektes bekannt. Es ist dort jedoch keine Konstruktion im direkten Zusammenhang mit dem Aufbau eines Wälzlagers beschrieben, in das ein Drehmomentsensor integriert wird. Zur Messung des Magnetfeldes ist ein spezieller Sensor beschrieben, mittels dessen der Strom bei einer Sättigungsmagnetisierung einer Sonde in verschiedenen Magnetisierungsrichtungen hochfrequent gemessen wird, wodurch das Magnetfeld des magnetostriktiven Elements genau gemessen werden kann.

US 5,816,599 A beschreibt eine Antriebsvorrichtung für ein Zweirad mit einer Drehmoment-Erfassungs-Einheit, wobei außerhalb der Tretlagerpatrone eine Spuleneinheit angeordnet ist, die mit einer außerhalb der Tretlagerpatrone vorgesehenen Beschichtung zusammenwirkt. Hierbei ist nachteilig, dass der begrenzte Bauraum der Welle insbesondere in axialer Richtung nur unzureichend ausgenutzt werden kann, da die Einheit an einem abgestellten Abschnitt der rechten Kurbel angeordnet ist.

Es ist die Aufgabe der Erfindung, eine baulich kompakte und lagerichtige Anordnung des magnetischen Sensors zu der Welle des Fahrrades anzugeben, um den gerade für Tretlagerwellen bei Fahrrädern begrenzten Bauraum effektiv ausnutzen zu können.

Diese Aufgabe wird gelöst durch eine Antriebseinrichtung mit einer um eine Achse drehbar gelagerten Antriebswelle und mit zwei mit dieser in Bezug auf die Achse in Umfangsrichtung winkelsteif verbundenen Antriebskurbeln sowie mit einem mit der Antriebswelle verbundenen Abtriebselement zur Übertragung von Drehmoment zwischen der Antriebswelle und einem Lastelement, umfassend einen mit der Antriebswelle fest verbundenen, axial zwischen einer Antriebskurbel und dem Abtriebselement angeordneten magnetostriktiven Sensor, wobei der magnetostriktive Sensor einen axialen Abschnitt der Antriebswelle als Teil umfasst, mit den erfindungswesentlichen Merkmalen:
dass der axiale Abschnitt der Antriebswelle eine permanente Vormagnetisierung aufweist,
dass der axiale Abschnitt der Antriebswelle als Signalgeber für mindestens einen Magnetfeldsensor ausgebildet ist, und
dass der Magnetfeldsensor in einer Tretlagerpatrone angeordnet ist.

Das Merkmal, dass der axiale Abschnitt der Antriebswelle eine permanente Vormagnetisierung aufweist, bietet den Vorteil, unter Beibehaltung des magnetostriktiven Messprinzips eine platzsparende Anordnung für die Antriebswelle zu finden.

Das Merkmal, dass der Magnetfeldsensor in einer Tretlagerpatrone aufgenommen ist, bietet den Vorteil, eine baulich kompakte und lagerichtige Anordnung des magnetischen Sensors zu der Welle des Fahrrades anzugeben, um den gerade für Tretlagerwellen bei Fahrrädern begrenzten Bauraum effektiv ausnutzen zu können.

Dadurch, dass mit der Antriebswelle wenigstens ein magnetostriktiver Sensor fest verbunden ist, teilt dieser jede Torsionsbelastung, die in dem axialen Abschnitt der Welle, in der er befestigt ist, übertragen wird.

Üblicherweise wird das Drehmoment mittels einer Antriebskurbel eingebracht und an dem Abtriebselement mittels weiterer mit diesem gekoppelter mechanischer Elemente übertragen. Daher ist es sinnvoll, axial zwischen diesen beiden Elementen auf der Antriebswelle einen magnetostriktiven Sensor vorzusehen.

Um das insgesamt durch die Welle übertragene Drehmoment zu jedem Zeitpunkt oder auch gemittelt erfassen zu können, ist es weiterhin vorteilhaft, zwischen jeder der Antriebskurbeln und dem Abtriebselement jeweils wenigstens einen magnetostriktiven Sensor vorzusehen.

Bei einem Fahrrad beispielsweise ergibt es sich durch die physiologischen und physikalischen Grundgegebenheiten, dass ein Fahrradfahrer die beiden Antriebskurbeln/Tretkurbeln nicht gleichzeitig gleich stark treibt, sondern periodisch wechselnd und in Abhängigkeit von der Winkelstellung der jeweiligen Antriebskurbel.

Es kann das über jede der Antriebskurbeln eingebrachte Drehmoment zeitlich wenigstens über eine halbe Drehung der Antriebswelle gemittelt werden und die Drehmomente beider Antriebskurbeln können beispielsweise auch miteinander verglichen werden, um Asymmetrien beim Fahrer auszugleichen.

Die magnetostriktiven Sensoren weisen jeweils einen oder vorteilhaft auch zwei magnetische Körper aus einem permanentmagnetischen, magnetostriktiven Material auf. Dieses Material zeichnet sich dadurch aus, dass im unbelasteten Zustand der Magnetisierungszustand erhalten bleibt, dass sich jedoch bei jeder Verformung eine Änderung der magnetischen Eigenschaften und damit eine Änderung des Streufeldes außerhalb des magnetostriktiven Körpers ergibt. Somit lassen sich durch Nachweis der Streufelder Verformungen und damit auf die magnetostriktiven Körper wirkende Biege- oder Torsionsmomente nachweisen.

Die entsprechenden magnetostriktiven Körper können so ausgebildet sein, dass der magnetische Fluss im wesentlichen innerhalb des Körpers verläuft und ein Streufeld idealerweise außerhalb nur dann auftritt, wenn ein Torsions- oder Biegemoment aufgebracht wird.

Die entsprechenden Körper können beispielsweise auf die Antriebswelle aufgeklebt, aufgelötet oder aufgeschweißt sein, sie können jedoch auch in eine Ausnehmung eingeklebt oder eingelötet, eingeschweißt oder eingepresst sein.

Da viele Stahlsorten die Voraussetzungen des magnetostriktiven Effektes erfüllen, ist erfindungsgemäß vorgesehen einen axialen Abschnitt der Antriebswelle durch entsprechende Vormagnetisierung als magnetostriktiven Körper zu nutzen. Dies kann beispielsweise dadurch geschehen, dass die Antriebswelle mit einem hohen impulsartigen Strom durchsetzt wird, um aufgrund des Ampere'schen Gesetzes eine hohe Magnetisierung in Umfangsrichtung des Strompfades zu erreichen.

Der magnetisierte axiale Abschnitt der Antriebswelle erfüllt damit die Funktion der vorbeschriebenen magnetostriktiven Körper, nämlich die, Signalgeber mindestens eines magnetostriktiven Sensors zu sein.

Mehrere magnetostriktive Körper können beispielsweise konzentrisch als zylindrische Körper ausgebildet und gegensinnig in Umfangsrichtung magnetisiert sein, so dass die magnetischen Streufelder einander im Grundzustand weitestgehend kompensieren. Wird ein derartiger aus zwei magnetostriktiven Körpern bestehender magnetostriktiver Sensor mit der Antriebswelle tordiert, so entsteht beispielsweise eine axiale Streumagnetfeldkomponente, die mit einem Magnetfeldsensor nachgewiesen werden kann.

Es kann auch vorteilhaft vorgesehen sein, dass zwei magnetostriktive Körper eines Sensors axial hintereinander liegend angeordnet sind. Diese können beispielsweise gegensinnig magnetisiert sein. In den axialen Randbereichen der magnetostriktiven Körper können so genannte Pinningregionen vorgesehen sein, die den magnetischen Fluss fixieren.

Die obigen Ausführungen betreffend einen oder mehrere magnetostriktive Körper als Signalgeber für Magnetfeldsensoren gelten entsprechend, wenn erfindungsgemäß der mindestens eine axiale Abschnitt der Antriebswelle selbst eine Magnetisierung aufweist und als Signalgeber für einen oder mehrere Magnetfeldsensoren dient.

Ist ein axialer Abschnitt der Antriebswelle als Signalgeber für mindestens einen Magnetfeldsensor ausgebildet, ist vorzugsweise vorgesehen, dass der axiale Abschnitt einen ersten, oberflächennahen Bereich und einen zweiten, oberflächenfemen Bereich umfasst, wobei der oberflächennahe Bereich eine erste Magnetisierung und der oberflächenfeme Bereich eine zweite Magnetisierung aufweist, derart, dass sich im unbelasteten Zustand der Antriebswelle, wenn kein äußeres Drehmoment auftritt, die erste Magnetisierung und die zweite Magnetisierung derart In Betrag und Richtung aufheben, dass außerhalb der Antriebswelle kein Magnetfeld auftritt. Jedoch sind die erste bzw. zweite Magnetisierung ihrem Betrag nach bzw. durch die Abmessung der beiden Bereiche derart aufeinander abgestimmt, dass die beiden Magnetisierungen sich nicht mehr aufheben, sobald eine mechanische Spannung, beispielsweise ein auf die Antriebswelle wirkendes Drehmoment, auftritt. In diesem Fall tritt außerhalb der Antriebswelle ein Magnetfeld auf, das durch einen oder mehreren Magnetfeldsensoren erfasst wird.

Vorzugsweise ist für den mit einer Vormagnetisierung versehenen axialen Abschnitt der Antriebswelle vorgesehen, dass in Längserstreckung der Antriebswelle zu mindestens einer Seite, besonders bevorzugt zu beiden Seiten des axialen Abschnitts der Antriebswelle so genannte 'pinning zones' vorgesehen sind, Bereiche also, in denen das Magnetfeld deutlich abfällt, so dass in Längsrichtung der Antriebswelle das Magnetfeld des axialen Abschnitts auf diesen im wesentlichen beschränkt ist und Streufelder in Längsrichtung der Antriebswelle unterdrückt werden. Die genannten 'pinning zones' lassen sich ähnlich wie der mit der Vormagnetisierung versehene axiale Abschnitt der Antriebswelle durch einen Stromimpuls von hoher Intensität erhalten.

Es versteht sich, dass magnetostriktive Körper bzw. erfindungsgemäß mit einer Vormagnetisierung versehen axiale Abschnitte der Antriebswelle gleichwertige Alternativen darstellen, die auch in Kombination miteinander vorgesehen sein können, um zwei oder mehr Signalgeber für magnetostriktive Sensoren auszubilden. Die folgenden Ausführungen gelten, auch wenn diese explizit auf magnetostriktive Körper Bezug nehmen sollten, sinngemäß auch für den Fall, dass ein axialer Abschnitt der Antriebswelle eine Vormagnetisierung aufweist, also für den Fall, dass die Antriebswelle selbst abschnittsweise als magnetostriktiver Körper ausgebildet ist.

Durch die somit im Belastungs-/Torsionsfall erzeugten magnetischen Streufeldkomponenten, die unterschiedlich ausgerichtet sein können und die mit verschiedenen Magnetfeldsensoren nachgewiesen werden, können durch rechnerische Berücksichtigung Störfelder kompensiert werden. Beispielsweise das Erdmagnetfeld kann so herausgerechnet werden.

Es können zur Erzielung einer höheren Genauigkeit auch mehr als zwei, beispielsweise bis zu acht, solcher magnetostriktiver Körper mit entsprechenden Magnetfeldsensoren eingesetzt werden.

Die Magnetfeldsensoren können grundsätzlich die bekannten Funktionsweisen wie beispielsweise die einer Förstersonde oder eines Hallsensors aufweisen.

Als besonders vorteilhaft hat sich erwiesen, dass ein Magnetfeldsensor wenigstens eine elektrische Spule mit einem ferromagnetischen Kern aufweist, die mit einer Wechselstromquelle zur wechselnden Magnetisierung des Kerns bis zur Sättigung verbunden ist.

Durch eine solche wechselnde Bestimmung der bis zur Sättigung zu erzeugenden Flussdichte kann mit besonders geringem Aufwand und besonders genau die Streufeldstärke bestimmt werden. Die Messung ist auch besonders schnell durchführbar, da die wechselnden Magnetfeldsättigungen problemlos im Kilohertz-Bereich erreicht werden können.

Die Magnetfeldsensoren liefern als Messergebnis eine Magnetfeldstärke, die zur Ermittlung eines Biege- oder Drehmomentes weiterverarbeitet werden kann.

Die Magnetfeldsensoren sind vorteilhaft ortsfest gegenüber der Antriebswelle angeordnet, bei einem Fahrrad beispielsweise in der Tretlagerpatrone oder im Gehäuse des Tretlagers oder befestigt an einem Außenring des entsprechenden Wälzlagers der Antriebswelle.

Sie sind mit einer Auswerteeinrichtung verbunden, die den Magnetfeldwerten entsprechende Drehmomentwerte aufgrund einer in einer Speichereinrichtung hinterlegten Messwerttabelle zuordnet. Es ist auch denkbar, eine einfache Rechenvorschrift zu benutzen, um aus den gemessenen Magnetfeldstärken jeweils Drehmomente zu bestimmen.

Die Auswerteeinrichtung kann weiterhin zeitlich gleitende Mittelwerte bestimmen, so dass das mittlere Drehmoment für jede Antriebskurbel beispielsweise über eine halbe Umdrehung der Welle und auch in Summe für die Antriebswelle bestimmbar ist.

Zusätzlich kann auch im Abtriebsstrang das Drehmoment gemessen werden, so dass auch etwaige Verluste berechenbar sind.

Wird zusätzlich die Drehzahl der Antriebswelle gemessen oder die Geschwindigkeit des Fahrrades, woraus sich auf die Drehzahl zurückrechnen lässt, so kann unter Berücksichtigung der entsprechenden Drehmomente auch die Leistung berechnet werden.

Die Auswerteeinrichtung ist vorteilhaft mit einer Analyseeinrichtung verbunden, in der Schwellwerte für Drehmomente in einer Speichereinrichtung hinterlegt und mittels einer Vergleichseinrichtung mit gemessenen Drehmomentwerten verglichen werden.

Die Analyseeinrichtung kann ihrerseits mit einer Steuereinrichtung verbunden sein, die mit einem Zusatzantrieb und/oder einer Bremseinrichtung eines Ergometers oder einer Schalteinrichtung für ein Getriebe verbunden sein kann.

In der Analyseeinrichtung kann bei Überschreiten eines bestimmten Drehmomentes an der Antriebswelle oder an einer Antriebskurbel die Entscheidung getroffen werden, das Drehmoment zu begrenzen, beispielsweise durch Änderung einer Getriebeübersetzung bei dem Lastelement. Dies kann bei einem Fahrrad beispielsweise bedeuten, dass bei zu hohen Drehmomenten ein niedrigerer Gang geschaltet wird.

Die entsprechenden Schaltschwellen können sowohl Momentanwerte des gemessenen Drehmomentes als auch gleitende Durchschnittswerte betreffen.

Die Entscheidungen können zudem auch unter Berücksichtigung der Drehzahl beziehungsweise der aus Drehzahl und Drehmoment berechneten Leistung getroffen werden.

Ebenso können die entsprechenden Schwellen des Drehmomentes dazu genutzt werden, einen Zusatzantrieb bei einem Fahrrad zuzuschalten, beispielsweise in Form eines Elektroantriebs oder bei einem Ergometer den Tretwiderstand herunter- oder heraufzusetzen.

Ändert sich die Richtung des eingebrachten Drehmomentes, so kann insbesondere beim Betrieb eines Fahrrads darauf geschlossen werden, dass eine Bremsung beabsichtigt wird und aus dieser Information können Befehle für die Bremseinrichtung abgeleitet werden, so dass beispielsweise eine zusätzliche Bremse zugeschaltet werden kann.

Die Messung von Drehmomenten in der Antriebswelle erlaubt bei den beschriebenen Anwendungen vielfältige Steuerungsmöglichkeiten und die Anordnung der entsprechenden magnetostriktiven Sensoren im Bereich der Antriebswelle bringt es gleichzeitig mit sich, dass die Sensoren durch die Kapselung der Welle gut gegen Umwelteinflüsse geschützt sind. Damit werden auch Fehlfunktionen vermieden und Beschädigungen der Sensoren werden unwahrscheinlich.

Im folgenden wird die Erfindung anhand eines Ausführungsbeispiels in einer Zeichnung gezeigt und anschließend beschrieben.

Dabei zeigt
- Fig. 1: im Querschnitt eine Antriebswelle mit zwei Antriebskurbeln wie sie bei einem Fahrrad eingesetzt werden;
- Fig. 2: eine dreidimensionale Ansicht der Anordnung aus Figur 1;
- Fig. 3: die grundsätzliche Funktion der magnetostriktiven Sensoren;
- Fig. 4: eine Anordnung mit zwei konzentrischen magnetostriktiven Körpem;
- Fig. 5: schematisch die Änderung des Magnetfeldes durch den magnetostriktiven Effekt;
- Fig. 6: eine Anordnung von zwei magnetostriktiven Körpern axial hintereinander;
- Fig. 7: den Längsschnitt einer Antriebswelle mit zwei magnetostriktiven Sensoren;
- Fig. 8a: eine erste Umsetzung der Ausgestaltung aus Figur 7;
- Fig. 8b: zeigt den in Figur 8a eingekreisten Teil in vergrößertem Maßstab,
- Fig. 9: eine zweite Ausgestaltung ähnlich der Konfiguration aus Flgur 7,
- Fig. 10: schematisch eine Antriebswelle und einer nachgeschalteten Auswerteeinheit und Steuereinrichtung.

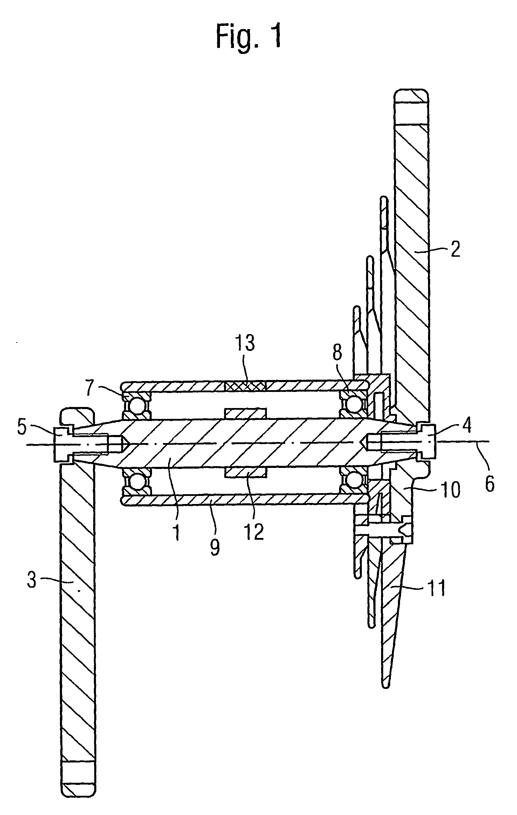

Figur 1 zeigt eine Antriebswelle 1 eines Fahrrades, die an jedem ihrer Enden mit je einer Antriebskurbel 2, 3, in diesem Zusammenhang auch Tretkurbel genannt, mittels einer Verschraubung 4, 5 in Umfangsrichtung in Bezug auf die Achse 6 winkelsteif fest verbunden ist. Die Welle 1 ist in zwei Lagern 7, 8, die als Kugellager ausgebildet sind, gelagert und in einem Tretlagergehäuse 9 geschützt untergebracht.

Die Baueinheit, bestehend aus den Lagern 7, 8 und der Welle 1, kann zusätzlich auch in einer so genannten Tretlagerpatrone zusammengefasst sein.

Über einen Kurbelstern 10 ist die Antriebswelle 1 mit einem Radkranz beziehungsweise einem Satz von Radkränzen 11 verbunden, die das Abtriebselement darstellen und eine Kette des Fahrrads antreiben.

Axial in der Mitte der Welle ist auf diese ein magnetostriktiver Körper 12 in Form einer Hülse aufgebracht, beispielsweise aufgelötet oder aufgeschrumpft. Diese Hülse bildet einen Teil eines magnetostriktiven Sensors, dessen zweiter Teil von einer Magnetfeldsonde 13 zur Überwachung besonderer Magnetfeldkomponenten des Streufeldes des magnetostriktiven Körpers 12 dient. Beispielsweise kann der magnetostriktive Körper 12 als Permanentmagnet in Umfangsrichtung dauerhaft magnetisiert sein, so dass die magnetischen Flusslinien innerhalb des Körpers umlaufen und geschlossen sind. Es tritt dann im drehmomentfreien Zustand praktisch kein Streufeld nach außen.

Der Magnetfeldsensor 13 wird demnach in diesem Zustand auch keine Magnetfeldkomponenten nachweisen können.

Wird die Welle 1 und damit auch der magnetostriktive Körper einer Torsion unterworfen, so ergeben sich durch die Magnetostriktionswirkung zusätzliche Magnetfeldkomponenten, die außerhalb des magnetostriktiven Körpers ein geändertes Streufeld erzeugen. Diese können mittels des Magnetfeldsensors 13 nachgewiesen werden und sind ein Maß für die Verformung in Folge der Torsion der Welle 1.

Mittels des magnetostriktiven Körpers 12 kann somit ein Drehmoment erfasst werden, das zwischen der Antriebskurbel 3 und dem Abtrieb auf der gegenüberliegenden Seite der Welle 1 übertragen wird.

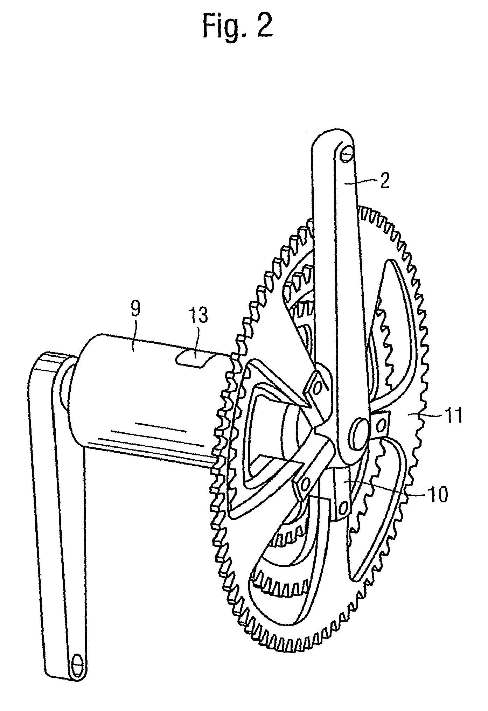

In der Figur 2 ist in dreidimensionaler Darstellung ein Zahnkranz 11 beziehungsweise ein Satz von Zahnkränzen dargestellt, der einen Teil eines schaltbaren Getriebes bildet.

Außerdem ist ein Kurbelstern 10 zu erkennen, der baulich mit der Antriebskurbel 2 zusammenhängt und mit dessen Speichen entsprechende Speichen der Zahnkränze verschraubt sind.

Der Kurbelstern kann direkt mit der Antriebskurbel 2 verbunden oder auf der Welle 1 drehfest befestigt sein.

Weiterhin ist das Gehäuse 9 des Tretlagers dargestellt, mit einem Magnetfeldsensor 13, der beispielsweise eine elektrische Spule aufweist. Zu Kompensationszwecken können auch mehrere Spulen mit entsprechenden Kernen vorgesehen sein, wobei die Kerne durch Einprägen eines Wechselstroms hochfrequent ummagnetisiert werden, wobei sich eine nachzuweisende Magnetfeldstärke dadurch bemerkbar macht, dass die zur Sättigung zusätzlich zu erzeugenden Stromstärken in den beiden Richtungen der Magnetisierung unterschiedlich sind. Aus dieser Asymmetrie kann die nachgewiesene Magnetfeldstärke bestimmt werden.

Es ist jedoch auch denkbar, handelsübliche Magnetfeldsonden wie beispielsweise Hallsensoren oder Förstersonden einzusetzen.

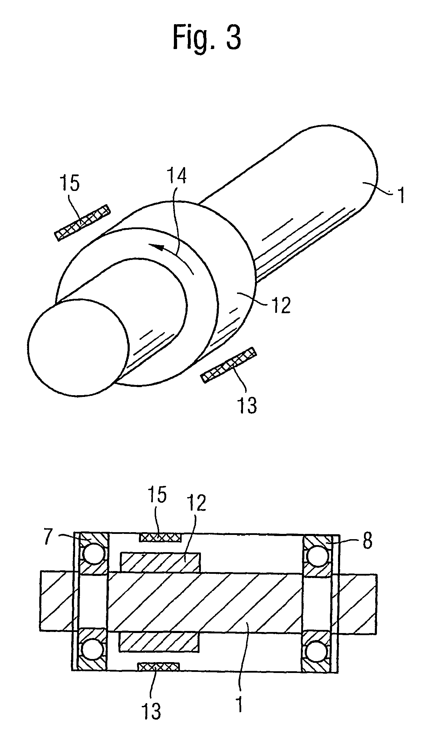

Figur 3 zeigt im oberen Teil eine dreidimensionale Ansicht einer Welle 1 mit einem magnetostriktiven Körper 12, der auf diese als Hülse aufgeschoben ist und in dem magnetische Flusslinien in Umfangsrichtung, angedeutet durch den Pfeil 14, geschlossen umlaufen.

Am Umfang der Welle, um 180° versetzt, sind zwei Magnetfeldsensoren 13, 15 dargestellt, die Streumagnetfeldkomponenten nachweisen können.

Im unteren Teil der Figur 3 ist die Konfiguration mit entsprechenden Lagern und einer Tretlagerpatrone in einem Längsschnitt dargestellt. Die Lager sind mit 7, 8 bezeichnet, die entsprechenden Drehmomente werden jeweils an den Enden der Welle 1 mittels Antriebskurbeln eingebracht und auf ein nicht näher dargestelltes, zwischen den Antriebskurbeln liegendes, Abtriebselement übertragen.

Der magnetostriktive Sensor 12, 13, 15 kann Torsionen jedoch nur dann nachweisen, wenn der Teil der Welle, auf dem der magnetostriktive Körper 12 angeordnet ist, auch tatsächlich Drehmoment überträgt, was nur dann der Fall ist, wenn er axial zwischen der Stelle, an der das Drehmoment eingebracht wird und dem Abtriebselement angeordnet ist.

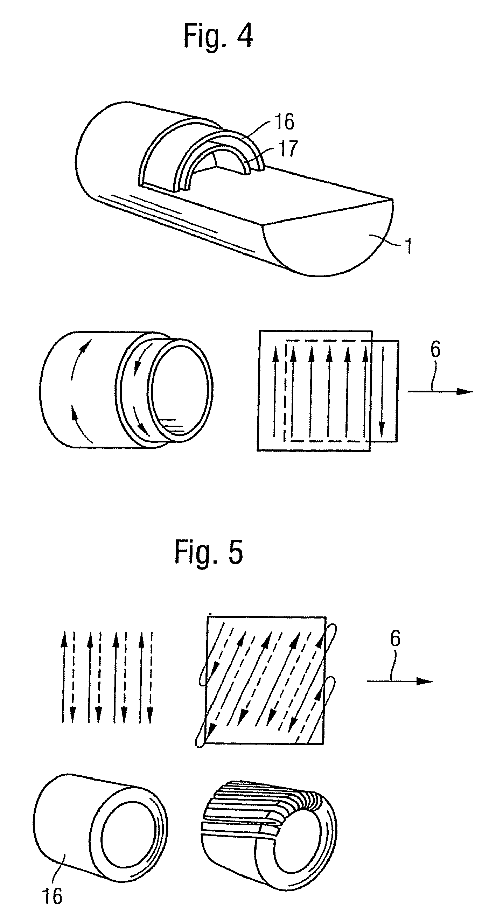

In der Figur 4 ist eine mögliche Anordnung mit mehreren magnetostriktiven Körpern schematisch dargestellt, wobei axial gesehen auf einem kurzen Abschnitt der Welle 1 zwei konzentrische hohlzylindrische magnetische Körper 16, 17 vorgesehen sind, die, wie im linken unteren Teil der Figur 4 dargestellt ist, gegensinnig in Umfangsrichtung permanentmagnetisiert sind.

Durch diese Konfiguration heben sich eventuell verbleibenden Streufelder im unbelasteten Zustand auf, jedenfalls ergeben sich keine in Axialrichtung der Welle 1 gerichteten Magnetfeldkomponenten.

Im unteren rechten Teil der Figur 4 ist eine Abrollung der Körper 16, 17 gezeigt, aus der hervorgeht, dass der magnetische Fluss keine Komponente in Axialrichtung 6 der Welle aufweist.

Die Figur 5 zeigt im linken Teil der Darstellung ein hohlzylindrisches magnetostriktives Element 16 in unbelastetem Zustand und darüber die Abrollung mit der Symbolisierung der magnetischen Flusslinien ausschließlich in Umfangsrichtung.

Im rechten Teil der Figur ist der tordierte, mit einem Drehmoment belastete Zustand des magnetostriktiven Körpers gezeigt, wobei definierte Materialstücke, die im unbelasteten Zustand axial verlaufen, im belasteten Zustand wendelförmige Ausschnitte aus dem hohlzylindrischen Körper 16 bilden.

Hierdurch ergeben sich, wie aus der Darstellung im rechten oberen Teil der Figur 5 hervorgeht, zusätzliche axiale Komponenten des magnetischen Flusses, die zur Entstehung von axialen Komponenten des Streumagnetfeldes führen.

Diese können leicht mittels Magnetfeldsensoren nachgewiesen werden.

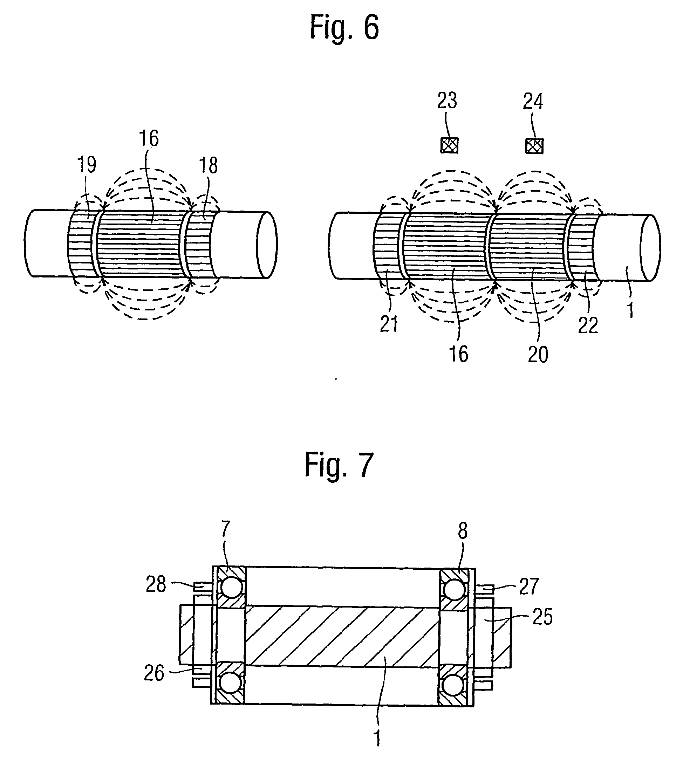

Die Figur 6 zeigt eine Variante, bei der im linken Teil der Figur eine Hülse 16 in die Welle eingelassen oder als Teil der Welle ausgebildet ist, sofern diese aus einem passenden magnetostriktiven Material besteht.

Axial beiderseits des magnetostriktiven Körpers 16 sind so genannten Pinningregionen 18, 19 vorgesehen, die das Magnetfeld stabilisieren.

Als gestrichelte Linien sind teilweise axial gerichtete Streufelder eingezeichnet, die bei einer Torsionsbelastung auftreten und nachgewiesen werden können.

Im rechten Teil der Figur sind zwei Hülsen 16, 20 axial hintereinander an der Welle 1 angeordnet, wobei die Magnetisierung der Hülsen 16, 20 jeweils in Umfangsrichtung der Welle 1, jedoch gegensinnig zueinander eingestellt ist.

Beiderseits der magnetostriktiven Körper 16, 20 sind Pinningregionen 21, 22 zur Stabilisierung des Magnetfelds vorgesehen.

Durch diese Anordnung entstehen durch die Anisotropieeffekte bei der Magnetostriktion axial gerichtete Streumagnetfeldkomponenten in jeweils entgegengesetzten, axialen Richtungen. Diese können mittels zweier Magnetfeldsensoren 23, 24 nachgewiesen werden, wobei Störfelder herausgerechnet oder kompensiert werden können. Es kann somit mit einer Kombination mehrerer magnetstriktiver Körper eine höhere Messgenauigkeit erreicht werden.

In der Figur 7 ist eine Konfiguration gezeigt, bei der die Antriebswelle 1 in den Lagern 7, 8 gelagert ist und axial im Bereich außerhalb des Zwischenraums der Lager 7, 8 zwei magnetostriktive Körper 25, 26 angeordnet sind. Jedem der magnetostriktiven Körper ist ein Magnetfeldsensor 27, 28 zur Messung der Streufeldkomponenten und damit zur Erfassung des anliegenden Drehmoments zugeordnet.

Liegt das Abtriebselement der Antriebswelle zwischen den magnetostriktiven Körpern 25, 26, so kann das von beiden Enden der Welle her eingebrachte Drehmoment jeweils zwischen der Antriebskurbel und dem Abtriebselement einzeln bestimmt werden. Damit kann auf einfache Weise auch die Summe der auf die Antriebswelle wirkenden Drehmomente bestimmt werden, die für die Gesamtbelastung und für die aufgebrachte Leistung maßgeblich ist.

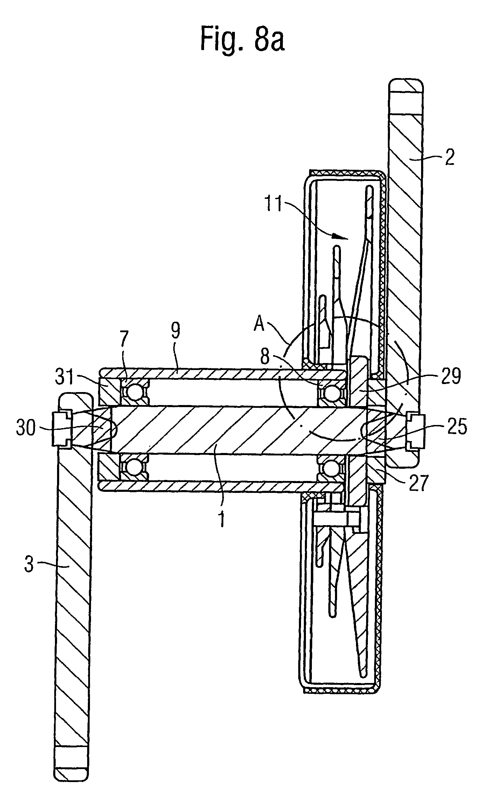

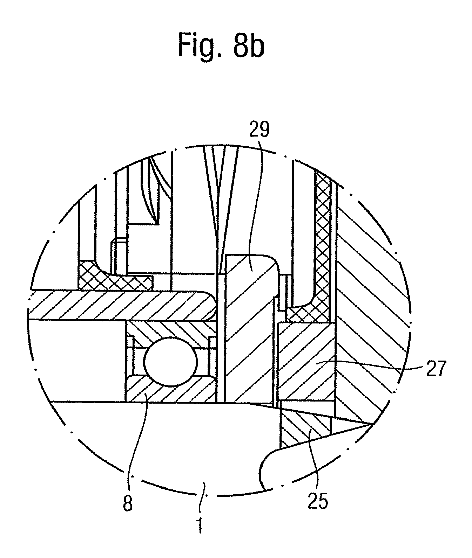

Die Figur 8a zeigt einen Längsschnitt durch eine Tretlageranordnung mit einer Welle 1, einer Kapselung 9 des Tretlagers, Kugellagern 7, 8 und Antriebskurbeln 2, 3.

Bei dieser Konstruktion wird das Antriebsdrehmoment durch die Antriebskurbeln 2, 3 in die Welle 1 eingebracht und das Abtriebselement ist als Scheibe beziehungsweise Tretkurbelstern 29 unmittelbar mit der Welle 1 drehfest verbunden. Mit dem Kurbelstern 29 sind andererseits die Zahnkränze 11 verbunden.

Das Drehmoment wird somit auf der einen Seite von der Antriebskurbel 2 axial über die Antriebswelle 1 zu dem Kurbelstern 29 übertragen, so dass axial zwischen diesen Elementen ein magnetostriktiver Körper 25 angeordnet werden kann. Dieser ist in die Welle 1 integriert und von einem Sensorring 27 mit einem oder mehreren Magnetfeldsensoren umgeben. Mittels dieses Sensors lässt sich somit das von der Antriebskurbel 2 zu dem Abtriebselement 29 übertragene Drehmoment messen.

Das Drehmoment, das zwischen der Antriebskurbel 3 und dem Abtriebselement 29 übertragen wird, kann problemlos mit einem magnetostriktiven Körper 30 axial vor dem Lager 7, jedoch theoretisch auch überall zwischen dem Lager 7 und dem Lager 8 erfasst werden. In der Figur ist der zweite magnetostriktive Körper 30 in der Nähe der Antriebskurbel 3 dargestellt und ebenfalls von einem Sensorring 31 mit einem oder mehreren Magnetfeldsensoren umgeben.

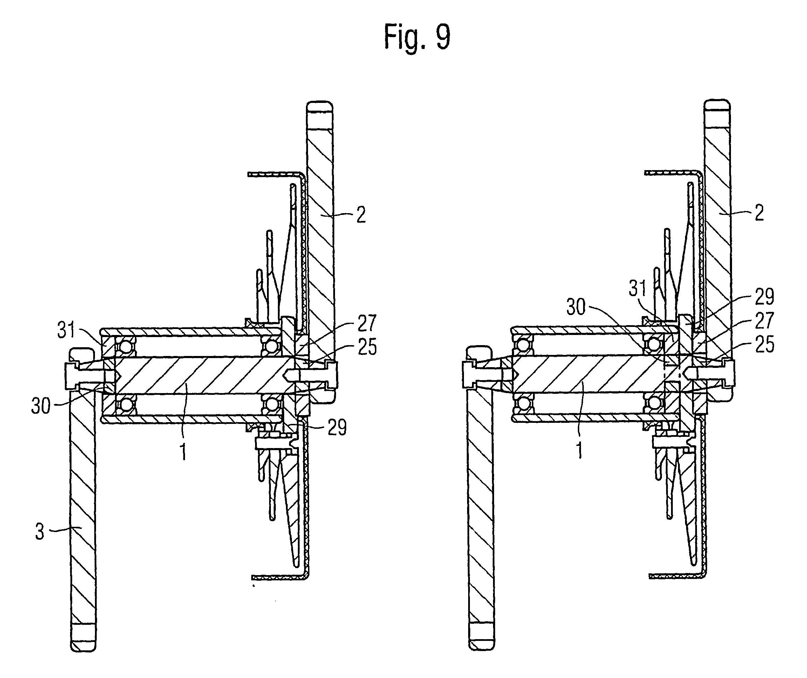

In der Figur 9 sind in der linken und in der rechten Hälfte der Darstellung zwei Varianten miteinander verglichen, wobei in der rechten Variante die magnetostriktiven Körper beiderseits unmittelbar axial neben dem Abtriebselement 29 dargestellt und jeweils von Sensorringen 27, 31 umgeben sind. Die magnetostriktiven Körper sind mit 25, 30 bezeichnet.

Im Vergleich dazu sind im linken Figurenteil die magnetostriktiven Körper einerseits zwischen dem Abtriebselement 29 und der Antriebskurbel 2 angeordnet, wobei der magnetostriktive Körper wieder mit 25, der Sensorring mit 27 bezeichnet ist. Andererseits ist ein zweiter magnetostriktiver Sensor in unmittelbarer Nähe der Antriebskurbel 3 angeordnet, dort mit 30 bezeichnet und ebenfalls von einem Sensorring 31 umgeben.

Zur Bestimmung der beiden von den Antriebskurbeln 2, 3 eingebrachten Drehmomente in die Antriebswelle 1 sind beide Varianten gleichwertig.

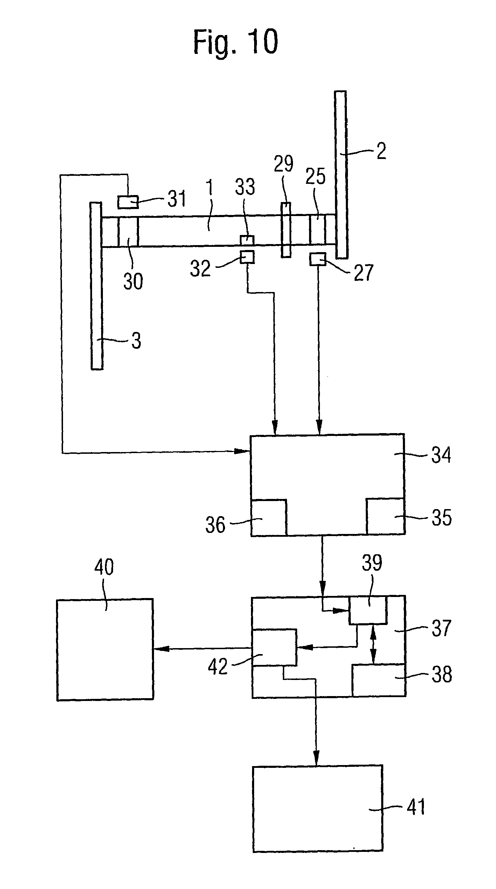

Figur 10 zeigt schematisch eine Antriebswelle 1 mit zwei magnetostriktiven Körpern 25, 30 und entsprechenden Magnetfeldsensoren 27, 31 sowie Antriebskurbeln 2, 3 und ein Abtriebselement 29.

Zusätzlich ist ein Drehzahlsensor 32 dargestellt, der mit einem auf der Welle befestigten Element 33 zusammenwirkt.

Die Magnetfeldsensoren 27, 31 sind mit einer Auswerteeinheit 34 verbunden. In dieser ist eine Speichereinrichtung 35 vorgesehen, die eine Wertetabelle enthält, mittels deren den gemessenen Magnetfeldstärken jeweils individuell Drehmomentwerte zugeordnet werden können. Somit sind die Drehmomentwerte axial zu beiden Seiten des Abtriebelements 29 momentan erfassbar und können auch zeitlich gemittelt werden. Sie können addiert werden, um ein Gesamtdrehmoment zu berechnen oder auch subtrahiert, um eventuelle Asymmetrien zwischen den von links und rechts eingebrachten Drehmomenten zu detektieren.

Mittels des Drehzahlsensors 32 kann im Zusammenwirken mit einer Zeitbasis 36 eine Drehzahl bestimmt werden, die gemeinsam mit den erfassten Drehmomentwerten für eine Leistungsbestimmung verwendet werden kann.

Die entsprechenden ausgewerteten Daten werden an eine Analyseeinrichtung 37 weitergegeben, in der Schwellwerte für bestimmte Steueroptionen hinterlegt sind. Diese sind in einer zweiten Speichereinrichtung 38 gespeichert und werden mit den Messwerten mittels einer Vergleichseinrichtung 39 verglichen.

Dabei können Leistungswerte verglichen werden, momentane Drehmomentwerte oder zeitlich gemittelte Drehmomentwerte.

Als Reaktionsoptionen steht für eine Steuereinrichtung 42 die Betätigung einer Schalteinrichtung 40 zur Veränderung einer Getriebeübersetzung zur Verfügung oder die Ansteuerung eines Zusatzantriebs 41, bei einem Fahrrad beispielsweise eines Elektroantriebs.

Somit kann mittels der Erfindung auf einfache Weise und ohne grundsätzlich in den Aufbau einer Maschine einzugreifen, das Drehmoment an der Antriebswelle an einer oder mehreren Stellen gemessen werden und mittels einer Steuereinrichtung kann eine Assistenzfunktion aktiviert werden, so dass beispielsweise bei der Anwendung bei Fahrrädern dem Fahrer ein höherer Fahrkomfort zur Verfügung gestellt wird.

Die vorstehend beschriebene Antriebseinrichtung kann weiter eine Übertragungsvorrichtung für die erfassten Messwerte umfassen. Die Übertragungsvorrichtung übermittelt dabei beispielsweise per Funk oder per IR-Signal die erfassten Messwerte an einen außerhalb der Maschine angeordneten Empfänger.

### Bezugszeichenliste

- 1: Antriebswelle
- 2, 3: Antriebskurbel
- 4, 5: Verschraubung
- 6: Achse
- 7,8: Lager
- 9: Tretlagergehäuse
- 10: Kurbelstern
- 11: Radkränze
- 12, 25, 26: magnetostriktive Körper
- 13, 15, 23, 24, 27, 28: Magnetfeldsensor
- 16, 17, 20: Hohlzylindrische magnetische Körper, Hülse
- 18, 19, 21, 22: Pinningregionen
- 29: Tretkurbelstern
- 30: magnetostriktiver Körper
- 31: Sensorring
- 32: Drehzahlsensor
- 33: Auswerteeinheit
- 35: Speichereinrichtung
- 36: Zeitbasis
- 37: Analyseeinrichtung
- 38: Speichereinrichtung
- 39: Vergleichseinrichtung
- 40: Schalteinrichtung
- 41: Zusatzantrieb

## Patentansprüche

1. Antriebseinrichtung mit einer um eine Achse (6) drehbar gelagerten Antriebswelle (1) und mit zwei mit dieser in Bezug auf die Achse in Umfangsrichtung winkelsteif verbundenen Antriebskurbeln (2, 3) sowie mit einem mit der Antriebswelle (1) verbundenen Abtriebselement (29) zur Übertragung von Drehmoment zwischen der Antriebswelle (1) und einem Lastelement,
umfassend einen mit der Antriebswelle (1) fest verbundenen, axial zwischen einer Antriebskurbel (2, 3) und dem Abtriebselement (29) angeordneten magnetostriktiven Sensor (12, 13, 25, 27, 30, 31), wobei der magnetostriktive Sensor (12, 13, 25, 27, 30, 31) einen axialen Abschnitt der Antriebswelle als Teil umfasst,
**dadurch gekennzeichnet,**
**dass** der axiale Abschnitt der Antriebswelle (1) eine permanente Vormagnetisierung aufweist,
**dass** der axiale Abschnitt der Antriebswelle (1) als Signalgeber für mindestens einen Magnetfeldsensor ausgebildet ist, und
**dass** der Magnetfeldsensor in einer Tretlagerpatrone angeordnet ist.

2. Antriebseinrichtung nach Anspruch 1,
**dadurch gekennzeichnet,**
**dass** je ein magnetostriktiver Sensor (12, 13, 25, 27, 30, 31) axial zwischen jeder der Antriebskurbeln (2, 3) und dem Abtriebselement (29) angeordnet ist.

3. Antriebseinrichtung nach Anspruch 1 oder 2,
**dadurch gekennzeichnet,**
**dass** der magnetostriktive Sensor (12, 13, 25, 27, 30, 31) mindestens zwei eine permanente Vormagnetisierung aufweisende magnetisierten Abschnitte der Antriebswelle (1) aufweist.

4. Antriebseinrichtung nach Anspruch 3,
**dadurch gekennzeichnet,**
**dass** die zwei magnetisierten Abschnitte im unbelasteten Zustand gegensinnig magnetisiert sind.

5. Antriebseinrichtung nach Anspruch 3 oder 4,
**dadurch gekennzeichnet,**
**dass** die zwei magnetisierten Abschnitte eines magnetostriktiven Sensors (16, 20, 23, 24) axial hintereinander liegend angeordnet sind.

6. Antriebseinrichtung nach Anspruch 5,
**dadurch gekennzeichnet,**
**dass** die durch Torsion der zwei magnetisierten Abschnitte erzeugten Magnetfeldkomponenten unterschiedliche Richtungen aufweisen.

7. Antriebseinrichtung nach einem der Ansprüche 1 bis 6,
**dadurch gekennzeichnet,**
**dass** der mindestens eine axiale Abschnitt der Antriebswelle (1) einen ersten, oberflächennahen Bereich mit einer ersten Magnetisierung und einen zweiten, oberflächenfernen Bereich mit einer zweiten Magnetisierung umfasst, wobei sich die erste Magnetisierung und die zweite Magnetisierung in einem mechanisch unbelasteten, insbesondre drehmomentfreien Zustand der Antriebswelle (1) zu einem außerhalb der Antriebswelle (1) im wesentlichen verschwindenden Magnetfeld addieren.

8. Antriebseinrichtung nach einem der Ansprüche 1 bis 7,
**dadurch gekennzeichnet, dass**
an mindestens einer Seite des mit der Magnetisierung versehenen axialen Abschnitts der Antriebswelle (1) eine Pinning zone angeordnet ist, die das außerhalb der Antriebswelle (1) messbare Magnetfeld des axialen Abschnittes im wesentlichen auf den Bereich des axialen Abschnittes begrenzt.

9. Antriebseinrichtung nach einem der Ansprüche 1 bis 8,
**dadurch gekennzeichnet,**
**dass** jedem magnetostriktiven Sensor (12, 13, 25, 27, 30, 31) ein Magnetfeldsensor (13, 15, 27, 31) zur Messung des magnetischen Streufeldes zugeordnet ist.

10. Antriebseinrichtung nach Anspruch 9,
**dadurch gekennzeichnet,**
**dass** jedem mit einer Magnetisierung versehenen axialen Abschnitt der Antriebswelle ein Magnetfeldsensor (13, 15, 27, 31) zugeordnet ist.

11. Antriebseinrichtung nach Anspruch 9 oder 10,
**dadurch gekennzeichnet,**
**dass** ein Magnetfeldsensor (13, 15, 27, 31) wenigstens eine elektrische Spule mit einem ferromagnetischen Kern aufweist, die mit einer Wechselstromquelle zur wechselnden Magnetisierung des Kerns bis zur Sättigung verbunden ist.

12. Antriebseinrichtung nach Anspruch 9, 10 oder 11,
**dadurch gekennzeichnet,**
**dass** der oder die Magnetfeldsensoren (13, 15, 27, 31) gegenüber der Antriebswelle (1) ortsfest angeordnet sind.

13. Antriebseinrichtung nach einem der Ansprüche 1 bis 12,
**gekennzeichnet durch**
eine Auswerteeinrichtung (34), die mit den Magnetfeldsensoren (27, 31) verbunden ist und den gemessenen Magnetfeldwerten Drehmomentwerte zuordnet.

14. Antriebseinrichtung nach Anspruch 13,
**gekennzeichnet durch**
eine Analyseeinrichtung (37), in der Schwellwerte für Drehmomente in einer Speichereinrichtung (38) hinterlegt sind und mittels einer Vergleichseinrichtung (39) mit gemessenen Drehmomentwerten verglichen werden.

15. Antriebseinrichtung nach Anspruch 14,
**gekennzeichnet durch**
eine Steuereinrichtung (42), die mit der Analyseeinrichtung (37) einerseits und einem Zusatzantrieb (41) und/oder einer Schalteinrichtung (40) für ein Getriebe andererseits verbunden ist.

16. Antriebseinrichtung nach einem der Ansprüche 1 bis 15, weiter umfassend eine Übertragungsvorrichtung, die die erfassten Messwerte an einen Empfänger insbesondere per Funk oder IR-Signal übermittelt.

17. Antriebseinrichtung nach einem der Ansprüche 1 bis 16, **dadurch gekennzeichnet, dass** zur Ausbildung der Vormagnetisierung des magnetisierten axialen Abschnitts der Antriebswelle (1) die Antriebswelle (1) mit einem hohen impulsartigen Strom durchsetzt wurde, um eine hohe Magnetisierung in Umfangsrichtung des Strompfades zu erreichen.

18. Antriebseinrichtung nach einem der Ansprüche 1 bis 17, **dadurch gekennzeichnet, dass** ein Drehzahlsensor (32) vorgesehen ist, der mit einem auf der Welle befestigten Element (33) zusammenwirkt.

19. Mittels mindestens einer Antriebskurbel antreibbare Einrichtung, insbesondere Fahrrad, Ergometer oder Pedelec, **gekennzeichnet durch** eine Antriebseinrichtung nach einem der Ansprüche 1 bis 18.

## Claims

1. Drive device comprising a drive shaft (1) mounted so as to rotate about an axis (6), and comprising two driving cranks (2, 3) connected to said shaft in the circumferential direction with respect to the axis in an angularly rigid manner, and comprising an output element (29) which is connected to the drive shaft (1) and has the purpose of transmitting torque between the drive shaft (1) and a load element, comprising a magnetostrictive sensor (12, 13, 25, 27, 30, 31) which is permanently connected to the drive shaft (1) and is arranged axially between a driving crank (2, 3) and the output element (29),
wherein the magnetostrictive sensor (12, 13, 25, 27, 30, 31) comprises an axial section of the drive shaft as a part,
**characterized**
**in that** the axial section of the drive shaft (1) is permanently pre-magnetized,
**in that** the axial section of the drive shaft (1) is embodied as a signal generator for at least one magnetic field sensor, and
**in that** the magnetic field sensor is arranged in a bottom bracket cartridge.

2. Drive device according to Claim 1,
**characterized**
**in that** in each case a magnetostrictive sensor (12, 13, 25, 27, 30, 31) is arranged axially between each of the driving cranks (2, 3) and the output element (29).

3. Drive device according to Claim 1 or 2,
**characterized**
**in that** the magnetostrictive sensor (12, 13, 25, 27, 30, 31) has at least two magnetized sections of the drive shaft (1) which are permanently pre-magnetized.

4. Drive device according to Claim 3,
**characterized**
**in that** the two magnetized sections are magnetized in opposite directions in the unloaded state.

5. Drive device according to Claim 3 or 4,
**characterized**
**in that** the two magnetized sections of a magnetostrictive sensor (16, 20, 23, 24) are arranged lying axially one behind the other.

6. Drive device according to Claim 5,
**characterized**
**in that** the magnetic field components which are generated by the two magnetized sections by means of torsion have different directions.

7. Drive device according to one of Claims 1 to 6,
**characterized**
**in that** the at least one axial section of the drive shaft (1) comprises a first region, near to the surface, with a first magnetization and a second region, remote from the surface, with a second magnetization, wherein the first magnetization and the second magnetization are added in a mechanically unloaded, in particular torque-free, state of the drive shaft (1) to form an essentially diminishing magnetic field outside the drive shaft (1).

8. Drive device according to one of Claims 1 to 7,
**characterized**
**in that** a pinning zone is arranged on at least one side of the axial section, provided with the magnetization, of the drive shaft (1), said pinning zone limiting the magnetic field, which can be measured outside the drive shaft (1), of the axial section essentially to the region of the axial section.

9. Drive device according to one of Claims 1 to 8,
**characterized**
**in that** a magnetic field sensor (13, 15, 27, 31) for measuring the magnetic leakage field is assigned to each magnetostrictive sensor (12, 13, 25, 27, 30, 31).

10. Drive device according to Claim 9,
**characterized**
**in that** a magnetic field sensor (13, 15, 27, 31) is assigned to each axial section, provided with magnetization, of the drive shaft.

11. Drive device according to Claim 9 or 10,
**characterized**
**in that** a magnetic field sensor (13, 15, 27, 31) has at least one electrical coil with a ferromagnetic core, said coil being connected to an alternating current source for the purpose of alternating magnetization of the core up to saturation.

12. Drive device according to Claim 9, 10 or 11,
**characterized**
**in that** the magnetic field sensor or sensors (13, 15, 27, 31) are arranged in a positionally fixed fashion with respect to the drive shaft (1).

13. Drive device according to one of Claims 1 to 12,
**characterized by**
an evaluation device (34) which is connected to the magnetic field sensors (27, 31) and assigns torque values to the measured magnetic field values.

14. Drive device according to Claim 13,
**characterized by**
an analysis device (37) in which threshold values for torques are stored in a memory device (38) and are compared with measured torque values by means of a comparison device (39).

15. Drive device according to Claim 14,
**characterized by**
a control device (42) which is connected to the analysis device (37) on the one hand, and to an additional drive (41) and/or a shifting device (40) for a transmission, on the other.

16. Drive device according to one of Claims 1 to 15, further comprising a transmission device which transmits the sensed measured values to a receiver, in particular by radio or IR signal.

17. Drive device according to one of Claims 1 to 16, **characterized in that** in order to bring about the pre-magnetization of the magnetized axial section of the drive shaft (1), a high, pulse-like current was passed through the drive shaft (1) in order to achieve a high level of magnetization in the circumferential direction of the current path.

18. Drive device according to one Claims 1 to 17, **characterized in that** a rotational speed sensor (32) is provided which interacts with an element (33) attached to the shaft.

19. Device which can be driven by means of at least one driving crank, in particular a cycle, ergometer or pedelec, **characterized by** a drive device according to one of Claims 1 to 18.

## Revendications

1. Dispositif d'entraînement comprenant un arbre d'entraînement (1) logé de manière à pouvoir tourner autour d'un axe (6) et comprenant deux manivelles d'entraînement (2, 3) reliées avec celui-ci selon une position angulaire fixe par rapport à l'axe dans le sens du pourtour ainsi qu'un élément mené (29) relié avec l'arbre d'entraînement (1) pour la transmission d'un couple entre l'arbre d'entraînement (1) et un élément de charge,
comprenant un capteur magnétostrictif (12, 13, 25, 27, 30, 31) relié à demeure avec l'arbre d'entraînement (1) et disposé dans le sens axial entre une manivelle d'entraînement (2, 3) et l'élément mené (29),
le capteur magnétostrictif (12, 13, 25, 27, 30, 31) comprenant comme partie une portion axiale de l'arbre d'entraînement,
**caractérisé en ce**
**que** la portion axiale de l'arbre d'entraînement (1) présente une prémagnétisation permanente,
**que** la portion axiale de l'arbre d'entraînement (1) est réalisée sous la forme d'un codeur de signal pour au moins un capteur de champ magnétique, et
**que** le capteur de champ magnétique est disposé dans une cartouche de palier de pédalier.

2. Dispositif d'entraînement selon la revendication 1, **caractérisé en ce qu'**un capteur magnétostrictif (12, 13, 25, 27, 30, 31) est à chaque fois disposé dans le sens axial entre chacune des manivelles d'entraînement (2, 3) et l'élément mené (29).

3. Dispositif d'entraînement selon la revendication 1 ou 2, **caractérisé en ce que** le capteur magnétostrictif (12, 13, 25, 27, 30, 31) présente au moins deux portions de l'arbre d'entraînement (1) magnétisées qui présentent une prémagnétisation permanente.

4. Dispositif d'entraînement selon la revendication 3, **caractérisé en ce qu'**à l'état non chargé, les deux portions magnétisées sont magnétisées en sens inverse.

5. Dispositif d'entraînement selon la revendication 3 ou 4, **caractérisé en ce que** les deux portions magnétisées d'un capteur magnétostrictif (16, 20, 23, 24) sont disposées l'une derrière l'autre dans le sens axial.

6. Dispositif d'entraînement selon la revendication 5, **caractérisé en ce que** les composantes de champ magnétique générées par la torsion des deux portions magnétisées présentent des directions différentes.

7. Dispositif d'entraînement selon l'une des revendications 1 à 6, **caractérisé en ce que** l'au moins une portion axiale de l'arbre d'entraînement (1) comprend une première zone proche de la surface qui présente une première magnétisation et une deuxième zone éloignée de la surface qui présente une deuxième magnétisation, la première magnétisation et la deuxième magnétisation, dans un état mécaniquement non chargé, notamment exempt de couple de l'arbre d'entraînement (1), s'additionnant en un champ magnétique pour l'essentiel insignifiant à l'extérieur de l'arbre d'entraînement (1).

8. Dispositif d'entraînement selon l'une des revendications 1 à 7, **caractérisé en ce qu'**une zone de blocage est disposée sur au moins un côté de la portion axiale de l'arbre d'entraînement (1) dotée de la magnétisation, laquelle limite le champ magnétique mesurable à l'extérieur de l'arbre d'entraînement (1) de la portion axiale pour l'essentiel à la zone de la portion axiale.

9. Dispositif d'entraînement selon l'une des revendications 1 à 8, **caractérisé en ce qu'**un capteur de champ magnétique (13, 15, 27, 31) destiné à mesurer le champ de dispersion magnétique est associé à chaque capteur magnétostrictif (12, 13, 25, 27, 30, 31).

10. Dispositif d'entraînement selon la revendication 9, **caractérisé en ce qu'**un capteur de champ magnétique (13, 15, 27, 31) est associé à chaque portion axiale de l'arbre d'entraînement qui est dotée d'une magnétisation.

11. Dispositif d'entraînement selon la revendication 9 ou 10, **caractérisé en ce qu'**un capteur de champ magnétique (13, 15, 27, 31) présente au moins une bobine électrique munie d'un noyau ferromagnétique, laquelle est reliée avec une source de courant alternatif pour la magnétisation alternée du noyau jusqu'à la saturation.

12. Dispositif d'entraînement selon la revendication 9, 10 ou 11, **caractérisé en ce que** le ou les capteurs de champ magnétique (13, 15, 27, 31) sont disposés en position fixe par rapport à l'arbre d'entraînement (1).

13. Dispositif d'entraînement selon l'une des revendications 1 à 12, **caractérisé par** un dispositif d'interprétation (34) qui est relié avec les capteurs de champ magnétique (27, 31) et qui associe les valeurs mesurées du champ magnétique à des valeurs de couple.

14. Dispositif d'entraînement selon la revendication 13, **caractérisé par** un dispositif d'analyse (37) dans lequel des valeurs de seuil pour des couples sont stockées dans un dispositif de mémorisation (38) et sont comparées au moyen d'un dispositif de comparaison (39) avec des valeurs mesurées du couple.

15. Dispositif d'entraînement selon la revendication 14, **caractérisé par** un dispositif de commande (42) qui est relié d'un côté avec le dispositif d'analyse (37) et de l'autre côté avec un mécanisme d'entraînement supplémentaire (41) et/ou un dispositif de changement de rapport (40) pour une boîte de vitesses.

16. Dispositif d'entraînement selon l'une des revendications 1 à 15, comprenant en outre un dispositif de transmission qui communique les valeurs mesurées acquises à un récepteur, notamment par signal radioélectrique ou infrarouge.

17. Dispositif d'entraînement selon l'une des revendications 1 à 16, **caractérisé en ce que** pour réaliser la prémagnétisation de la portion axiale magnétisée de l'arbre d'entraînement (1), l'arbre d'entraînement (1) a été chargé avec un courant fort de type impulsionnel afin d'obtenir une magnétisation élevée dans le sens du pourtour du chemin du courant.

18. Dispositif d'entraînement selon l'une des revendications 1 à 17, **caractérisé en ce qu'**il est prévu un détecteur de vitesse de rotation (32) qui interagit avec un élément (33) fixé sur l'arbre.

19. Dispositif pouvant être entraîné au moyen d'au moins une manivelle d'entraînement, notamment bicyclette, ergomètre ou vélo à assistance électrique, **caractérisé par** un dispositif d'entraînement selon l'une des revendications 1 à 18.
